# EUROPÄISCHE PATENTSCHRIFT

(11) **EP 0 778 481 B1**
(45) Veröffentlichungstag und Bekanntmachung des Hinweises auf die Patenterteilung: **27.11.2002**
(21) Anmeldenummer: 96113232.1
(22) Anmeldetag: 19.08.1996
(51) Int. Cl.: G02B 6/42, G02B 6/255

(54) **Verfahren zum Herstellen und präzisen Positionieren von optischen Mikrolinsen auf den Enden von Fasern und Lasern**
Procedure to manufacture microlenses precisely positioned on the ends of optical fibres and lasers
Procédé de fabrication de microlentilles positionnées de façon précise en fin de fibres optiques et laser

(30) Priorität: 07.12.1995 DE 19545721
(43) Veröffentlichungstag der Anmeldung: 11.06.1997
(73) Patentinhaber: Deutsche Telekom AG, 53113 Bonn (DE)
(72) Erfinder: Koops, Hans W.P., Dr., 64372 Ober-Ramstadt (DE); Babin, Sergey, Dr., 64347 Griesheim (DE)

(56) Entgegenhaltungen:
- EP-A- 0 589 622
- EP-A- 0 662 723
- DE-A- 2 358 881
- US-A- 4 932 989
- US-A- 5 345 336
- IBM TECHNICAL DISCLOSURE BULLETIN, Bd. 34, Nr. 6, 1.November 1991, Seiten 67-69, XP000228354 "APPARATUS FOR DETERMINING BEAM CENTRALITY IN CONNECTORIZED FIBER- OPTIC PACKAGES"

## Beschreibung

Die Erfindung betrifft ein Verfahren zum ortsgenauen Herstellen von wenigstens einer optischen Mikrokomponente auf einem vorbestimmten Bereich einer vorbestimmten Fläche wenigstens einer optischen Einrichtung nach Anspruch 1 sowie eine Vorrichtung zur Durchführung des Verfahrens nach Anspruch 11.

Es sind Verfahren bekannt, mit denen Mikrolinsen auf den Faser- und/oder Laserenden erzeugt werden können. Es wurde zum einen vorgeschlagen, Polymere auf Faserenden zu einer miniaturisierten Einzellinse zu pressen. Allerdings ist dieses Verfahren zu grob, um eine akzeptable Anpassung zwischen der Linse und einer Monomode-Faser zu ermöglichen. Eine andere Methode besteht darin, Präzisions-Kugellinsen auf die Enden optischer Einrichtungen aufzukleben. Diese mikromechanische Technik liefert allerdings keine besseren Ergebnisse. Es ist ferner bekannt, Zylinderlinsen auf Laserenden mittels einer hochauflösenden Elektronenstrahl-Lithographie festzulegen und durch reaktives Trockenätzen herzustellen. Der Trockenätzprozeß führt aber zu einer starken Oberflächenrauhigkeit der Linse aufgrund seiner Maskendefinition. Inzwischen sind zwar Verfahren zur Herstellung von 3-dimensional strukturierten Polymerschichten auf Faserenden verfügbar. Allerdings sind bisher keine Techniken bekannt, das Positionieren und Herstellen von Mikrolinsen auf Faserenden für industrielle Anwend ungen effektiv, geschweige denn automatisiert zu gestalten.

Der Erfindung liegt daher die Aufgabe zugrunde, ein Verfahren und eine Vorrichtung zu schaffen, die die Herstellung von optischen Mikrokomponenten auf den Enden von optischen Einrichtungen, insbesondere auf den Faser- und Laserenden, verbessert und die Fertigungszeit drastisch verringert.

Dieses technische Problem löst die Erfindung mit den Verfahrensschritten des Anspruchs 1 und den Merkmalen des Anspruchs 11.

Vorteilhafte Weiterbildungen sind in den Unteransprüchen angegeben.

Das Besondere der Erfindung ist vor allem darin zu sehen, daß vor dem Erzeugen einer optischen Mikrokomponente, wie z.B. einer sphärischen, nichtsphärischen, nicht rotationssymmetrischen hyperbolischen Linse, eines Prismas oder Systemen davon, auf dem Ende einer optischen Einrichtung, z.B. einer Faser oder eines Lasers, die Lage des zur Herstellung der optischen Mikrokomponente erforderlichen Belichtungsfelds präzise auf einen vorbestimmten Bereich positioniert wird. Dies geschieht mit den Hilfsmitteln einer Bildaufnahme- und Anzeigeeinrichtung sowie einer Bildverarbeitungseinrichtung, die mit einer Rechner-gesteuerten Belichtungseinrichtung, vorzugsweise eine Rasterelektronenmikroskop, zusammenwirken.

Die präzise Positionierung einer optischen Mikrokomponente auf einem vorbestimmten Bereich einer vorbestimmten Fläche wenigstens einer optischen Einrichtung wird dadurch erreicht, daß wenigstens ein Bild von der vorbestimmten Fläche aufgenommen und in einem Bildspeicher abgelegt werden kann. Danach wird die Lage des Randes der aufgenommenen, vorbestimmten Fläche an mehreren vorbestimmten Stellen gemessen und die dazu gehörenden Randkoordinaten ermittelt. Aus den ermittelten Randkoordinaten werden die Lagekoordinaten des vorbestimmten Bereichs, auf dem die optische Mikrokomponente gebildet werden soll, berechnet. Die für den vorbestimmten Bereich berechneten Lagekoordinaten werden mit vorprogrammierten Belichtungsdaten für die optische Mikrokomponente zu einem Datensatz zusammengefaßt. Ein Korpuskularstrahl, d.h. ein Elektronen-, Ionen- oder Photonenstrahl, wird mit Hilfe des Datensatzes derart gesteuert, daß die optische Mikrokomponente mit einer vorbestimmten optischen Eigenschaft präzise ausgerichtet auf dem vorbestimmten Bereich gebildet werden kann. Insbesondere erhält der Datensatz Angaben über den genauen Ort der zu bildenden optischen Mikrokomponente und über die Belichtungszeit, mit der ein bestimmter Punkt innerhalb des zu belichtenden Bereichs bestrahlt werden muß, um eine gewünschte optische Eigenschaft für die zu bildende Mikrokomponente zu erhalten.

Zweckmäßigerweise umfaßt der Positioniervorgang eine Grob- und Feinpositionierung der optischen Mikrokomponente. Dazu wird zunächst ein Bild mit niedriger Vergrößerung der optischen Einrichtung aufgenommen. Danach werden die Randkoordinaten ermittelt, so daß die optische Einrichtung mit der zu bearbeitenden Fläche schnell an den Bestrahlungsort bewegt werden kann. Erst jetzt findet die Feinpositionierung statt, indem zunächst der Korpuskularstrahl optimal fokussiert und stigmatisiert wird. Dazu wird ein beliebiger, außerhalb des zu belichtenden Bereichs liegender Fokussier-Bereich ausgewählt. Dieser Fokussier-Bereich wird mehrmals mit jeweils sukzessiv steigender Vergrößerung aufgenommen, bis der Korpuskularstrahl optimal fokussiert und stigmatisiert ist. Mit Hilfe des fokussierten Korpuskularstrahls ist es möglich, mit Hilfe bekannter Techniken der Bildverarbeitung -z. B. Erstellen von Histogrammen entlang vorbestimmter Linien oder der Schwerpunkt-Methode - an vorbestimmten Stellen die Randkoordinaten der Fläche präzise zu ermitteln. Aus diesen ermittelten Randkoordinaten kann dann in an sich bekannter Weise das Zentrum der Fläche ermittelt werden. In einer Recheneinheit, die die genauen Abmessungen der zu erzeugenden optischen Mikrokomponenten kennt, kann die Positionierung der Mikrokomponente auf dem vorbestimmten Bereich in Bezug auf den ermittelten Mittelpunkt der vorbestimmten Fläche berechnet werden.

Die Erfindung wird nachfolgend anhand der Ausführungsbeispiele in Verbindung mit den beiliegenden Zeichnungen näher erläutert. Es zeigen:
- Fig. 1: den Längsschnitt durch eine Monomode-Faser mit einem Faserkern und einer auf der Stirnfläche der Faser präzise positionierten und hergestellten hyperbolischen Linse nach der Erfindung,
- Fig. 2: ein vereinfachtes Schema zur präzisen Positionierung der in Fig. 1 gezeigten hyperbolischen Linse auf der Stirnfläche der Monomode-Faser,
- Fig. 3: einen Querschnitt eines Halbleiterlasers mit einer aktiven Zone, über der eine hyperbolische Linse gemäß der Erfindung präzise positioniert und hergestellt worden ist,
- Fig. 4: ein vereinfachtes Schema zur präzisen Positionierung der in Fig. 3 gezeigten hyperbolischen Linse auf der aktiven Laserzone, und
- Fig. 5: eine Fotografie eines Faserendes, das mit einem Trockenlack belegt war, wobei neben einer Linse die Stellen sichtbar sind, die während der Fokussierung und Positionierung belichtet und dadurch polymerisiert worden sind.

Bevor das erfindungsgemäße Verfahren näher beschrieben wird, werden zunächst die elektronischen und optischen Geräte kurz erläutert, die zur Durchführung des erfindungsgemäßen Verfahrens erforderlich sind.

Vorzugsweise wird ein gewöhnliches Rasterelektronenmikroskop in Verbindung mit einer an sich bekannten Bildverarbeitungseinrichtung und einem motorgetriebenen Tisch benutzt. Das Rasterelektronenmikroskop kann dabei drei ganz wesentliche Aufgaben erfüllen: 1. Mit Hilfe des Elektronenstrahls kann eine einzige oder ein Feld von optischen Fasern je nach Bedarf mehrmals abgetastet und auf einem Bildschirm dargestellt werden. 2. Das oder die dargestellten Bilder werden, wie dies noch näher erläutert wird, von der Bildverarbeitungseinrichtung dazu benutzt, vor der eigentlichen Herstellung einer optischen Mikrokomponente -bei der ersten Ausführungsform ist diese eine runde, hyperbolische Linse und beim zweiten Ausführungsbeispiel ist diese eine elliptische, hyperbolische Linse- auf einem Faserende die präzise Position des zur Linsenherstellung erforderlilchen Belichtungsfeldes bezüglich eines Bezugspunktes oder einer Bezugsfläche zu berechnen. Die Ermittlung der dazu erforderlichen Lagekoordinaten des Faserendes geschieht mit Hilfe des Elektronenstrahls. 3. Zu guter Letzt fungiert das Rasterelektronenmikroskop als Belichtungsgerät zur Herstellung der Linse auf dem vorher präzise definierten Bereich des Faserendes bzw. der Stirnfläche des Lasers. Auf dem rechnergesteuerten, motorbetriebenen Tisch können die Faser- oder Laserfelder angeordnet sein. Der Tisch dient dazu, eine ausgewählte Faser bzw. einen ausgewählten Laser an den Bestrahlungsort heranzuführen. Es sei angemerkt, daß die oben beschriebene Ausführungsform ausgesprochen vorteilhaft ist, da das präzise Positionieren des Belichtungsfeldes zum Aufbauen einer Linse auf der Stirnfläche der Faser und die sich daran anschließende Herstellung mittels Belichtung durch den Elektronenstrahl in einem einzigen Gerät, nämlich dem Rasterelektronenmikroskop, ausgeführt werden kann. Alternativ können auch beliebig andere Lithographiegeräte mit einer zusätzlichen Bildverarbeitungseinrichtung zum Einsatz kommen. Auch die getrennte Ausführung des Belichtungsgerätes und der Bildverarbeitungseinrichtung ist denkbar. Dazu kann ein speziell dafür dimensioniertes, rechnergestütztes Elektronenstrahl-Führungssystem in Verbindung mit einem bildmessenden Gerät vorgesehen sein, an das beispielsweise der Elektronenstrahl eines Rasterelektronenmikroskops koppelbar ist. Programmgesteuert kann der Elektronenstrahl die erforderlichen Arbeitsschritte nacheinander abarbeiten.

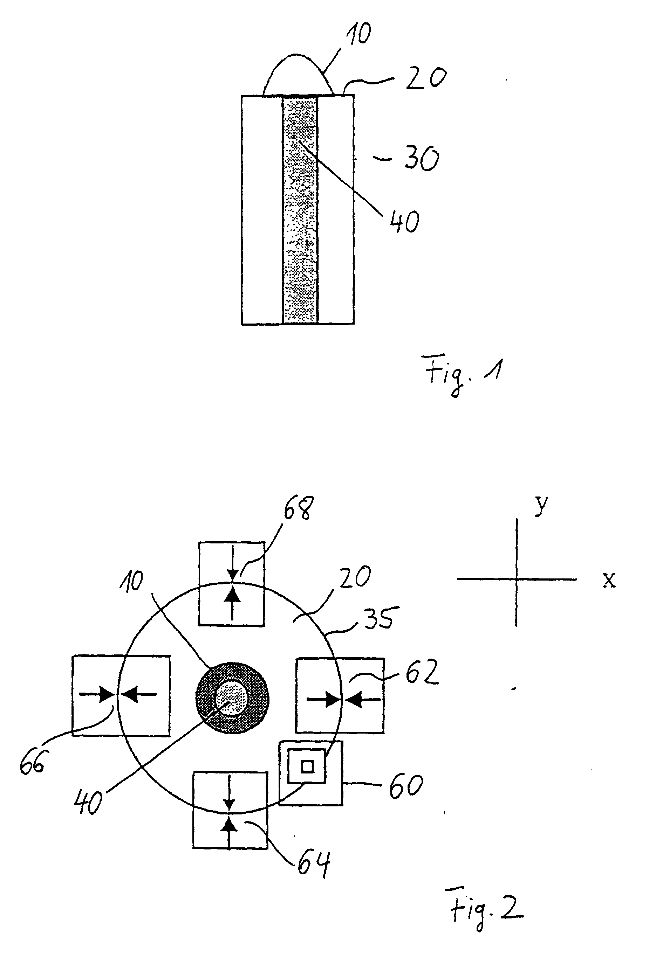

Das erfindungsgemäße Verfahren wird zunächst anhand einer Monomode-Faser beispielhaft erläutert, auf deren Ende eine hyperbolische Rundlinse aufgebracht werden soll. In Fig. 1 ist der Längsschnitt durch den Endabschnitt einer Monomode-Faser 30 dargestellt. Im Zentrum der Monomode-Faser 30 verläuft ein Faserkern 40. Der Faserkern 40 besitzt üblicherweise einen Durchmesser von 5 bis 10 µm, wohingegen die Monomode-Faser 30 selbst einen Durchmesser von etwa 125 µm aufweist. Auf der Stirnfläche oder dem Faserende 20 ist eine hyperbolische Rundlinse 10 zentriert über dem Faserkern 40 aufgebracht, der, abgesehen von einer durch den Fertigungsprozeß bedingten Ungenauigkeit nahezu in der Fasermitte liegt. Die Linse 10 kann eine größere Querschnittsfläche als der Faserkern 40 einnehmen.

An dieser Stelle sei angemerkt, daß es zwei bevorzugte Techniken gibt, mit denen optische Mikrokomponenten, wie z. B. Linsen und Prismen, direkt durch Belichtung des Faserendes 20 oder der Sirnfläche 100 eines Festkörperlasers 110 mit einem Korpuskularstrahl - das ist ein Elektronen-, Ionen- oder Photonenstrahl ( im UV-Bereich) - auf diesen Flächen hergestellt werden kann. Das eine Verfahren ist als Trockenlacktechnik bekannt. Hier wird entweder ein Trockenlack (z. B. Octavinyl-Silsesqui-oxan) im Hochvakuum mit einer definierten Schichtdicke auf das Faserende 20 bzw. die Stirnfläche 100 des Lasers 110 aufgedampft oder ein Polymer aus einer Plasma-Gasphase aus gesondert vorgelegten Präkursoren abgeschieden. Bei dem Trockenlack oder dem aus der Plasma-Gasphase abgeschiedenen Lack handelt es sich um ein Korpuskularstrahl-empfindliches Polymer, das durch lithographische Belichtung derart verändert wird, daß die Polymerschicht nach der Entwicklung ein 3-dimensionales Profil aufweist.

Bei dem anderen Verfahren handelt es sich um eine additive Lithographietechnik, bei der die optischen Mikrokomponenten aus aus der Gasphase adsorbierten Präkursor-Molekülen, die bei Belichtung mit Korpuskularstrahlen polymerisieren, unmittelbar auf dem Faserende oder der Stirnfläche des Lasers gebildet werden. Eine vorherige Belegung der Faserenden oder Laserflächen mit einem Trockenlack und eine anschließende Entwicklung der gebildeten optischen Mikrokomponenten ist dann nicht mehr erforderlich. Das erfindungsgemäße Verfahren bedient sich für die Herstellung von optischen Mikrokomponenten (Linsen, Strahlteiler, Prismen u.s.w) auf optischen Einrichtungen, insbesondere auf Enden von optischen Fasern und Lasern, sowohl der Trockenlack- als auch der additiven Lithographietechnik. Es sei nunmehr der Fall angenommen, daß das Faserende 20 mit einer Trockenlack-Schicht, aus der die hyperbolische Rundlinse 10 herausgearbeitet werden soll, belegt sei. Obwohl in Fig. 1 nur eine Faser 30 dargestellt ist, können mehrere Fasern zu einem Array gruppiert und auf dem motorbetriebenen Tisch gelagert sein. Auf den Enden der Fasern können dann nacheinander die entsprechenden Linsen aufgebaut werden. Nachdem die Fasern 30 in das Rasterelektronenmikroskop eingeschleust worden sind, wird zunächst ein Bild der gesamten Fasergruppe mit einer niedrigen Bildvergrößerung aufgenommen und in einen Bildspeicher der Bildverarbeitungseinrichtung eingelesenen. Die Lage der einzelnen Fasern 30, d. h. präziser gesprochen der Enden der Fasern, werden mit aus der Bildverarbeitung an sich bekannten Methoden lokalisiert. Als Beispiele seien an dieser Stelle die Schwerpunkts-Methode und die Erstellung von Histogrammen basierend auf Kontrastmessungen entlang vorbestimmter Linien erwähnt, mit denen die Zentrumskoordinaten der flächigen Faserenden bestimmt werden können. Anschließend wird die erste zu bearbeitende Faser 30 ausgewählt und mit Hilfe der zuvor ermittelten Zentrumskoordinaten von dem motorgetriebenen Tisch an den Bestrahlungsort des Rasterelektronenmikroskops herangefahren. Als nächster Schritt wird ein weiteres Bild von der Monomode-Faser 30 aber jetzt mit einer erhöhten Vergrößerung aufgenommen und wiederum in den Bildspeicher der Bildverarbeitungseinrichtung eingezogen. Bevor die hyperbolische Rundlinse 10 aus dem auf die Stirnfläche 20 der Faser 30 aufgebrachten Trockenlack durch eine vorprogrammierte Elektronenstrahlbelichtung herausgearbeitet werden kann, werden erfindungsgemäß zunächst die Lagekoodinaten des zum Aufbau der Linse 10 erforderlichen Belichtungsfeldes mit Bezug auf das Faserzentrum präzise berechnet. Man kann in diesem Fall auch einfach von der präzisen Positionierung der Linse 10 auf dem Faserkern 40 am Faserende 20 sprechen. Zu diesem Zweck müssen unter anderem die gewünschten Linsen-Abmessungen bekannt sein und beispielsweise in einem Speicher eines programmierbaren Mikroprozessors abgelegt werden. Als weitere Parameter können die Belichtungszeiten gespeichert werden, mit denen jeder Punkt auf der Stirnfläche 20 der Faser 30 zu belichten ist, damit die Linse eine gewünschte optische Eigenschaft, wie z. B. einen besonderen Brechungsindex, erhält.

Zur präzisen Positionierung der Linse 10 auf dem Faserkern 40 ist es zunächst notwendig, den vom Rasterelektronenmikroskop gelieferten Elektronenstrahl scharf auf einen Bereich 60 des Faserendes 20 zu fokussieren und stigmatisieren. Der Fokussier-Bereich 60 befindet sich vorzugsweise außerhalb des zu belichtenden Bereichs, wie dies in Fig. 2 gezeigt ist. Der Grund liegt darin, daß, obgleich die Fokussierung und Stigmatisierung des Elektronenstrahls mit verringerter Intensität erfolgt, der Trockenlack an diesem Bereich 60, wenn auch nur in geringem Maße, bereits belichtet und somit vernetzt wird. Dies ist in der Fig. 5 deutlich erkennbar, die die Aufnahme des Faserendes 20 mit der aus einem Trockenlack herausgebildeten Rundlinse 10 zeigt. Darüber hinaus sind in Fig. 5 vier umfangseitig im Abstand von 90° zueinander gebildete Positionier-Bereiche 62, 64, 66 und 68 sichtbar, deren Bedeutung weiter unten noch beschrieben wird.

Die Fokussierung und Stigmatisierung des Elektronenstrahls wird in Verbindung mit Fig. 2 näher beschrieben. Der ausgewählte Fokussier-Bereich 60 wird mehrmals aufgenommen, und zwar mit sukzessiv steigender Vergrößerung jedes Bildausschnittes. Dazu wird der Elektronenstrahl zeilenweise über den abzubildenden Bereich geführt. Während jeder Aufnahme wird der Elektronenstrahl aufgrund der zunehmenden Vergrößerung und der damit steigenden Auflösung des aufgenommenen Bereichs 60 nachgestellt. Es werden solange Bilder mit sukzessiv steigender Vergrößerung von dem Bereich 60 aufgenommen, bis der Elektronenstrahl aufgrund gerätetechnischer Grenzen nicht mehr besser fokussiert und stigmatisiert werden kann. Die Fokussierung und Stigmatisierung des Elektronenstrahls kann auch automatisiert erfolgen, da am Rand und in der Fläche 20 ausreichend feine Strukturen vorliegen.

Ist der Elektronenstrahl erst einmal fokussiert, kann mit der Berechnung der Zentrumskoordinaten des flächig aufgenommenen Faserendes 20 begonnen werden. Hierfür stehen die bekannten Hilsmittel der Bildverarbeitung zur Verfügung. Wie bereits erwähnt, kann mit Hilfe der Schwerpunkt-Methode das Zentrum des Faserendes 20 ermittelt werden. Die Zentrumskoordinaten der Faserendfläche 20 dienen als Bezugspunkt für die präzise Positionierung der Linse 10 auf dem Faserkern 40 oder jedem beliebigen Bereich innerhalb der Faserendfläche, sofern der Abstand des Zentrums des Bereichs vom Zentrum der Faserendfläche 20 bekannt ist. Zunächst wird die Lage des Faserrandes 35 der Faser 30 ermittelt, indem an vorbestimmten Stellen die Randkoordinaten bestimmt werden. Wie in Fig. 2 gezeigt ist, wird der Rand 35 an vier Bereichen 62, 64, 66 und 68 flächig aufgenommen. Aus den so gewonnenen Randkoordinaten kann dann auf bekannte Weise der Mittelpunkt des Faserendes 20 berechnet werden. Andere Verfahren berechnen das Kontrastprofil entlang mehrerer Linien senkrecht zum Rand unter Verwendung von Diskriminatoren, um die zur Berechnung des Faserzentrums erforderlichen Randkoordinaten zu erhalten. Mit diesen Methoden kann das Faserzentrum mit einer Genauigkeit von 0,3 µm bei einer einer Bildauflösung von 512 Pixeln und mit einer Genauigkeit von 0,15 µm bei einer Bildauflösung von 1024 Pixeln festgelegt werden. Mit anderen Worten erfolgt die Ermittlung des Faserzentrums mit einer Auflösung von etwa 100 nm.

Die ermittelten Faserzentrums-Koordinaten werden mit den gespeicherten Abmessungen und Belichtungsdaten, wie z. B. der Strahlendosisverteilung, der aufzubauenden Rundlinse 10 beispielsweise in einer Recheneinrichtung miteinander verrechnet und als Datensatz in einem Speicher abgelegt. Ein programmierbarer Rechner liest den Datensatz aus und steuert damit den Elektronenstrahl des Rasterelektronenmikroskops. Nachdem der Belichtungsvorgang beendet worden ist, wird der Trockenlack auf dem Faserende 20 thermisch oder in geeigneten Lösungsmitteln entwickelt. Als Ergebnis liegt eine optische Faser 30 vor, auf deren Faserende 20 über dem zentrisch gelagerten Faserkern 40 die Rundlinse 10 präzise ausgerichtet angeordnet ist und die gewünschten optischen Eigenschaften aufweist. Jetzt kann die nächste zu bearbeitende Faser mit Hilfe der grob ermittelten Zentrumskoordinaten an den Bestrahlungsort des Rasterelektronenmikroskops herangefahren und gemäß dem gerade beschriebenen Verfahren mit einer präzise ausgerichteten Linse auf dem Faserkern ausgebildet werden. Es sei noch angemerkt, daß mit dem oben beschrieben Verfahren nicht nur einzelne Linsen sondern sogar optische Mikro-Abbildungsysteme auf dem Faserende 20 hergestellt werden können. Die bildverarbeitenden Schritten, die Vorberechnung der präzisen Positionierung des Belichtungsfeldes zur Herstellung der Linse 10 und die Belichtung des Trockenlacks können somit in einem einzigen Gerät, das lediglich mit einem Bildverarbeitungssystem ausgerüstet ist, in einer optimal kurzen Fertigungszeit durchgeführt werden.

Das erfindungsgemäße Verfahren wird nunmehr anhand eines Festkörperlasers beispielhaft erläutert, auf dessen Stirnfläche über einer aktiven Zone eine elliptische, hyperbolische Linse entstehen soll.

Wiederum sei angenommen, daß eine Gruppe von Lasern auf dem motorgesteuerten Tisch angeordnet ist und in das Rasterelektronenmikroskop eingeschleust wurde. Eine grobe Lagebestimmung der einzelnen Laser erfolgt dadurch, daß ein Bild von dem Laserfeld mit niedriger Vergrößerung aufgenommen wird und die Orte der einzelnen Laser beispielsweise durch eine Schwerpunkt-Bestimmung der Stromkontakte, die sich durch Materialkontraste hervorheben, ermittelt werden. Jeder Laser weist bekannterweise an einer definierten Stelle einen solchen Stromkontakt auf. Der erste zu bearbeitende Laser 110 kann nunmehr mit Hilfe der zuvor ermittelten Lagekoordinaten an den Bestrahlungsort des Rasterelektronenmikroskops herangeführt werden.

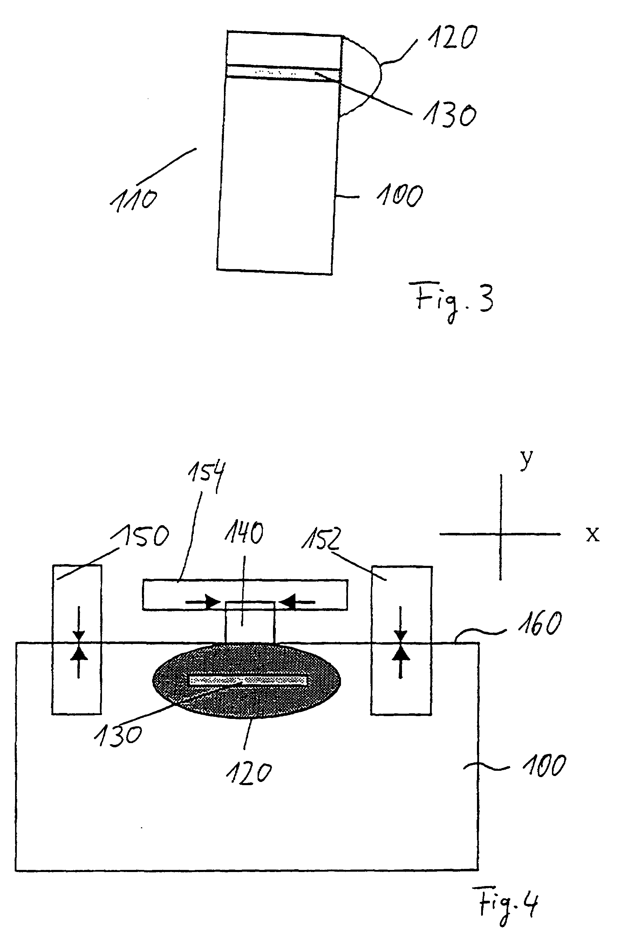

In Fig. 3 ist der Querschnitt durch einen Festkörperlaser 110 mit einer aktiven Zone 130 dargestellt, die nicht zentrisch in der Stirnfläche 100 liegt. Über der aktiven Zone 130 der Stirnfläche 100 ist eine hyperbolische, elliptische Linse 120 aufgebracht. Es sei diesmal angenommen, daß die Linse 120 nicht aus einem aufgetragenen Trockenlack, sondern mittels einer additiven Elektronenstrahl-Lithographie hergestellt worden sei.

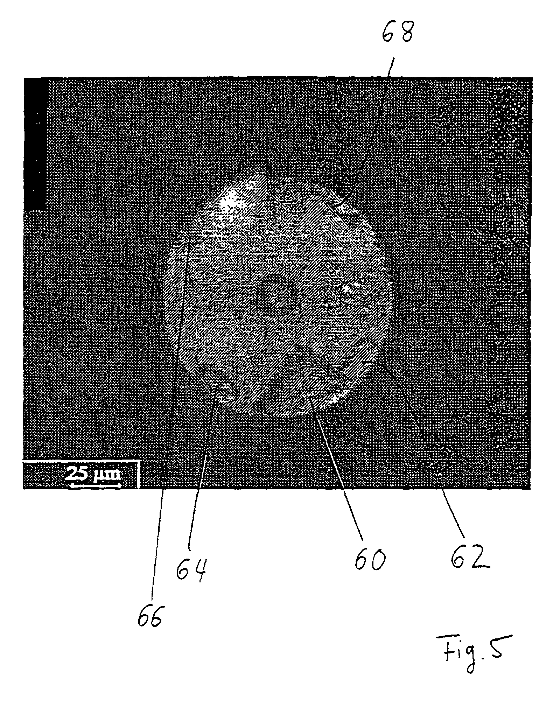

In Fig. 4 ist die aufgenommene Stirnfläche 100 mit der unterhalb des oberen Flächenrandes 160 eingebrachten aktiven Laserzone 130 dargestellt. Auf der aktiven Zone 130 ist die elliptische Linse 120 zu sehen, deren Querschnittsfläche größer ist als die der aktive Zone 130. Auf der Oberseite des Laser 110 ist der Stromkontakt 140 ausgebildet, dessen Mittelpunkt senkrecht in einem, aus der Herstellung bekannten, definierten Abstand über dem Mittelpunkt der aktiven Zone befindet. Die Genauigkeit der Lagen der beiden Mittelpunkte zueinander hängt vom Herstellungsprozeß ab und bestimmt den Präzisionsgrad, mit dem die Lage des zum Aufbringen der Linse erforderlichen Belichtungsfelds über der aktiven Zone 130 vorberechnet und positioniert werden kann. Die in Fig. 4 beispielhaft gezeigten Meßfenster 150, 152 und 154 dienen der Bestimmung der Lagekoordinaten des Stromkontaktes 140 und der Stirnflächenkante 160 des Lasers, aus denen das Zentrum der aktiven Zone 130 präzise berechnet werden kann.

Bevor die Position des Belichtungsfeldes berechnet werden kann, muß der Elektronenstrahl zuerst fokussiert und stigmatisiert werden. Dies geschieht in ähnlicher Weise wie im vorhergehenden Beispiel. Als Fokussierbereich kann ein Bereich gewählt, der vorteilhafterweise den Stromkontakt erfaßt. Ist der Elektronenstrahl erst einaml optimal fokussiert und stigmatisiert, können mit ihm in Verbindung mit den oben genannten üblichen Techniken der Bildverarbeitung die Lagekoordinaten der Stirnfläche 100 und die Zentrumkoordinaten des Stromkontaktes 140 ermittelt werden. Dazu können zunächst an vorbestimmten Stellen am Randbereich der Stirnfläche 100 mehrere in Fig. 4 gezeigte schmale Bilder 150 und 152 oder Linien-Raster (nicht dargestellt) eingezogen werden, die beispielsweise zur oberen horizontalen Kante 160 senkrecht verlaufen. Mit Hilfe der aufgenommenen Bilder 150, 152 oder der Linien-Raster wird die Lage der oberen Kante 160 aus dem Kontrastprofil bestimmt, das sich durch die Änderung der emittierten Sekundärelektronen ergibt, wenn der Elektronenstrahl die Stirnfläche 100 und einen Bereich außerhalb der Stirnfläche 100 abtastet. Die Lage des Zentrums des Belichtungsfeldes und damit der zu bildenden Linse 120 liegt danach in Y-Richtung mit einer Genauigkeit von 0,03 µm bei einer Bildauflösung von 512 Pixeln und mit einer Genauigkeit von 0, 015 µm bei einer Bildauflösung von 1024 Pixeln fest. Im nächsten Schritt werden die Zentrumskordinaten des Stromkontaktes 140 ermittelt. Dies geschieht beispielsweise mit Hilfe eines in x-Richtung aufgnommenen Histogramms entlang vorbestimmter Linien oder bei flächigen Bildaufnahmen mit Hilfe der Schwerpunkts-Methode. Die Lage des Zentrums des Belichtungsfeldes liegt danach auch in x-Richtung fest, da herstellungsbedingt der Abstand zischen dem Mittelpunkt des Stromkontaktes 140 und der aktiven Laserzone 130, auf der die Linse 120 aufgebracht werden soll, bekannt ist. Aus den ermittelten Zentrumskoordinaten der Aktiven Zone 130 und den gespeicherten Informationen über die Abmessungen und Lage der Linse 120 bezüglich der aktiven Zone 130 sowie die entsprechenden Belichtungszeiten (Dosisverteilung) für jeden Punkt der zu belichtenden Stirnfläche 100 werden die Steuerdaten für die Strahlführungseinrichtung berechnet. Der präzise ausgerichete Aufbau der Linse 120 mit den gewünschten optischen Eigenschaften erfolgt anschließend mit Hilfe des Rechner-gesteuerten Elektronenstrahls.

Dank der Erfindung ist es möglich, kostengünstig und schnell 3-dimensional strukturierte Polymerschichten auf einem vorbestimmten Bereich einer optischen Einrichtung, wie z. B. eines Faserende oder einer Laserfläche, präzise ausgerichtet herzustellen. Dazu ist lediglich ein Bezugspunkt, vorteilhafterweise das Zentrum der Fläche, auf der die optische Mikrokomponente hergestellt werden soll, mit Hilfe bekannter Methoden der Bildverarbeitung zu berechnen. Darüber hinaus muß herstellungsbedingt die Lage des Bereichs, auf dem die optische Mikrokomponente entstehen soll, zum Bezugspunkt bekannt sein. Schließlich sind die Daten über die Abmessungen und Lage der optischen Mikrokomponente und die Belichtungszeiten vorzugeben, mit denen die gewünschten optischen Eigenschaften erzielbar sind.

## Patentansprüche

1. Verfahren zum ortsgenauen Herstellen von wenigstens einer optischen Mikrokomponente (10; 120) auf oder über einem vorbestimmten Bereich (40; 130) einer vorbestimmten Fläche (20; 100) wenigstens einer optischen Einrichtung (30; 110) mit folgenden Schritten:
a) es wird wenigstens ein Bild der vorbestimmten Fläche (20; 100) aufgenommen und gespeichert;
b) die Lage des Flächenrandes (35; 160) wird an mehreren vorbestimmten Stellen (62, 64, 66, 68; 150, 152, 154) gemessen und die dazugehörenden Randkoordinaten ermittelt;
c) aus den ermittelten Randkoordinaten der Fläche (20; 100) und den gemessenen Lagekoordinaten des vorbestimmten Bereichs (40; 130) werden die Lagekoordinaten der optischen Mikrokomponente (10; 120) innerhalb der vorbestimmten Fläche (20; 100) berechnet;
d) die in Schritt c) berechneten Lagekoordinaten werden mit vorprogrammierten Belichtungsdaten für die optische Mikrokomponente zu einem Datensatz zusammengefaßt, und
e) ein Korpuskularstrahl wird mit Hilfe des in Schritt d) erstellten Datensatzes derart gesteuert, daß die optische Mikrokomponente mit einer vorbestimmten optischen Eigenschaft präzise ausgerichtet auf oder über dem vorbestimmten Bereich (40; 130) gebildet werden kann.

2. Verfahren nach Anspruch 1,
**dadurch gekennzeichnet, daß** Schritt c) folgende Schritte umfaßt:
c1) aus den ermittelten Randkoordinaten der vorbestimmten Fläche (20; 100) wird deren Zentrum berechnet;
c2) die Lagekoordinaten des vorbestimmten Bereichs (40 ; 130) innerhalb der vorbestimmten Fläche (20; 100) werden mit Bezug auf das Zentrum bestimmt.

3. Verfahren nach Anspruch 1 oder 2,
**dadurch gekennzeichnet, daß** Schritt a) folgende Unterschritte umfaßt:
a.1) es wird ein erstes Bild von der vorbestimmten Fläche (20; 100) der optischen Einrichtung (30; 110) mit niedriger Vergrößerung aufgenommen;
a.2) die Lage des Flächenrandes (35; 160) wird an mehreren vorbestimmten Stellen grob bestimmt und die dazugehörenden Randkoordinaten ermittelt;
a.3) die optische Einrichtung (30; 110) wird mit Bezug auf die ermittelten Randkoordinaten an den Bestrahlungsort bewegt;
a.4) es werden hintereinander Bilder mit jeweils sukzessiv steigender Vergrößerung von einem ausgewählten Fokussier-Bereich (60) der Fläche (20) aufgenommen, bis der Korpuskularstrahl optimal fokussiert und stigmatisiert ist;
und daß Schritt b) folgenden Schritt umfaßt:
an den vorbestimmten Stellen (62, 64, 66, 68; 150, 152, 154) des Flächenrandes (35; 160) wird jeweils eine Kontrastmessung zur Feinbestimmung der entsprechenden Randkoordinaten entlang einer senkrecht zum Rand verlaufenden Linie durchgeführt.

4. Verfahren nach Anspruch 1,2 oder 3,
**dadurch gekennzeichnet, daß** vor der Durchführung des Schrittes a) ein Korpuskularstrahl-empfindlicher Trockenlack oder ein Polymer aus einer Plasma-Gasphase aus gesondert vorgelegten Präkursoren auf die vorbestimmte Fläche (2; 100) in einer vorbestimmten Dicke aufgedampft wird.

5. Verfahren nach Anspruch 4,
**dadurch gekennzeichnet, daß** die aus dem aufgedampftem Trockenlack oder dem abgeschiedenen Polymer herausgebildete optische Mikrokomponente (10; 120) thermisch bzw. in Lösungsmitteln entwickelt wird.

6. Verfahren nach Anspruch 1, 2 oder 3,
**dadurch gekennzeichnet, daß** in Schritt e) die optische Mikrokomponente (10; 120) mit Hilfe des Korpuskularstrahls auf oder über dem vorbestimmten Bereich (40; 130) abgeschieden wird.

7. Verfahren nach einem der Ansprüche 1 bis 6,
**dadurch gekennzeichnet, daß** als optische Einrichtung eine optische Faser (30) und/oder ein Laser (110) benutzt wird.

8. Verfahren nach einem der Ansprüche 1 bis 7,
**dadurch gekennzeichnet, daß** auf dem vorbestimmten Bereich (40; 130) der vorbestimmten Fläche (20; 100) der optischen Einrichtung (30; 110) dreidimensional strukturierte Polymerschichten aufgebaut werden.

9. Verfahren nach einem der Ansprüche 1 bis 8,
**dadurch gekennzeichnet, daß** die Schritte a.1), a.2) und a.3) ersetzt werden durch:
a1') es wird ein Bild der vorbestimmten Flächen (20; 100) einer Gruppe von optischen Einrichtungen (30; 110) mit niedriger Vergrößerung aufgenommen;
a2') die Lagen der Flächenränder (35; 160) werden jeweils an mehreren vorbestimmten Stellen grob gemessen und die dazugehörenden Randkoordinaten ermittelt;
a3') es wird die optische Einrichtung (30; 110) ausgewählt und mit Bezug auf die ermittelten Randkoordinaten an den Bestrahlungsort bewegt, auf der die optische Mikrokomponente (10; 120) gebildet werden soll.

10. Vorrichtung zum Herstellen und präzisen Positionieren von optischen Mikrokomponenten (10; 12=9 auf optischen Einrichtungen (30; 110) gemäß dem Verfahren nach einem der Ansprüche 1 bis 10
mit folgenden Merkmalen:
eine Generatoreinrichtung zum Erzeugen eines Korpuskularstrahls variabler Intensität,
einen Kontrastdetektor zur Ermittlung der Konturen einer aufgenommenen, vorbestimmten Fläche einer optischen Einrichtung,
eine Recheneinrichtung, die aus den vom Kontrastdetektor gelieferten Werten die Lage eines vorbestimmten Bereichs innerhalb der vorbestimmten Fläche ermitteln kann,
eine programmierbare Strahlführungseinrichtung, die unter Ansprechen auf die von der Recheneinrichtung gelieferten Koordinatenwerte und auf vorprogrammierte Belichtungsdaten den Korpuskularstrahl derart über die vorbestimmte Fläche führt, daß auf dem vorbestimmten Bereich ein optische Mikrokomponente mit einer vorbestimmten optischen Eigenschaft aufbringbar ist.

11. Vorrichtung nach Anspruch 10,
**gekennzeichnet durch** einen programmierbaren Rechner, der die Überwachung und Steuerung der Vorrichtung übernimmt.

12. Vorrichtung nach Anspruch 10 oder 11,
**gekennzeichnet durch** einen vom Rechner gesteuerten Motortisch.

## Claims

1. Method for the precise-location manufacturing of at least one optical microcomponent (10; 120) on or above a predetermined region (40; 130) of a predetermined surface (20; 100) of at least one optical apparatus (30; 110) with the following steps:
a) at least one image of the predetermined surface (20; 100) is recorded and stored;
b) the position of the surface edge (35; 160) is measured at a plurality of predetermined points (62, 64, 66, 68; 150, 152, 154) and the corresponding edge coordinates are determined;
c) the position coordinates of the optical microcomponent (10; 120) within the predetermined surface (20; 100) are calculated from the determined edge coordinates of the surface (20; 100) and the measured position coordinates of the predetermined region (40; 130);
d) the position coordinates calculated in step c) are combined with preprogrammed exposure data for the optical microcomponent to form a data record; and
e) the data record produced in step d) is used to control a corpuscular beam such that the optical microcomponent with a predetermined optical property can be formed, precisely aligned, on or above the predetermined region (40; 130).

2. Method according to claim 1,
**characterized in that** step c) comprises the following steps:
c1) the centre of the predetermined surface (20; 100) is calculated from the determined edge coordinates thereof;
c2) the position coordinates of the predetermined region (40; 130) within the predetermined surface (20; 100) are determined with reference to the centre.

3. Method according to claim 1 or 2,
**characterized in that** step a) comprises the following substeps:
a.1) a first image of the predetermined surface (20; 100) of the optical apparatus (30; 110) is recorded with low magnification;
a.2) the position of the surface edge (35; 160) is roughly determined at a plurality of predetermined points and the corresponding edge coordinates are determined;
a.3) the optical apparatus (30; 110) is moved to the irradiation position with reference to the determined edge coordinates;
a.4) successive images with successively increasing magnification are recorded of a selected focusing region (60) of the surface (20) until the corpuscular beam has been optimally focused and stigmatized;
and step b) comprises the following step:
at each of the predetermined points (62, 64, 66, 68; 150, 152, 154) of the surface edge (35; 160) a contrast measurement for fine determination of the corresponding edge coordinates is performed along a line extending perpendicularly to the edge.

4. Method according to claim 1, 2 or 3,
**characterized in that**, prior to the performance of step a), a corpuscular-beam-sensitive dry varnish or a polymer of a plasma gas phase of separately presented precursors is vapour-deposited onto the predetermined surface (2; 100) in a predetermined thickness.

5. Method according to claim 4,
**characterized in that** the optical microcomponent (10; 120) formed from the vapour-deposited dry varnish or deposited polymer is developed thermally or in solvents.

6. Method according to claim 1, 2 or 3,
**characterized in that** in step e) the optical microcomponent (10; 120) is deposited on or above the predetermined region (40; 130) by means of the corpuscular beam.

7. Method according to any one of claims 1 to 6,
**characterized in that** an optical fibre (30) and/or a laser (110) is used as the optical apparatus.

8. Method according to any one of claims 1 to 7,
**characterized in that** three-dimensionally structured polymer layers are formed on the predetermined region (40; 130) of the predetermined surface (20; 100) of the optical apparatus (30; 110).

9. Method according to any one of claims 1 to 8,
**characterized in that** steps a.1), a.2) and a.3) are replaced by:
a1') an image of the predetermined surfaces (20; 100) of a group of optical apparatuses (30; 110) is recorded with low magnification;
a2') the positions of the surface edges (35; 160) are each roughly determined at a plurality of predetermined points and the corresponding edge coordinates are determined;
a3') the optical apparatus (30; 110) is selected and is moved with reference to the determined edge coordinates to the irradiation position on which the optical microcomponent (10; 120) is to be formed.

10. Device for manufacturing and precise positioning of optical microcomponents (10; 120) on optical apparatuses (30; 110) according to the method according to any one of claims 1 to 10
with the following features:
a generator apparatus for generating a corpuscular beam of variable intensity;
a contrast detector for determining the contours of a recorded, predetermined surface of an optical apparatus;
a computing apparatus capable of calculating from the values supplied by the contrast detector the position of a predetermined region within the predetermined surface;
a programmable beam guiding apparatus which, in response to the coordinate values supplied by the computing apparatus and to preprogrammed exposure data, guides the corpuscular beam over the predetermined surface such that an optical microcomponent with a predetermined optical property can be applied to the predetermined region.

11. Device according to claim 10,
**characterized by** a programmable computer which monitors and controls the device.

12. Device according to claim 10 or 11,
**characterized by** a motor table controlled by the computer.

## Revendications

1. Procédé de réalisation de précision d'au moins un micro-composant optique (10 ; 120) sur ou au-dessus d'une zone prédéterminée (40 ; 130) d'une surface prédéfinie (20 ; 100) d'au moins un élément optique (30 ; 110) consistant successivement à :
a) réaliser et sauvegarder au moins une image de la surface prédéfinie (20 ; 100) ;
b) mesurer la position du bord de la surface (35, 160) à plusieurs endroits prédéterminés (62, 64, 66, 68 ; 150, 152, 154) et en déterminer les coordonnées ;
c) calculer, à partir des coordonnées ainsi obtenues du bord de ladite surface (20 ; 100) et des coordonnées de position mesurées sur la zone prédéterminée(40 ; 130), les coordonnées de positionnement du micro-composant optique (10 ; 120) à l'intérieur de la surface prédéfinie (20 ; 100) ;
d) regrouper en un enregistrement les coordonnées calculées à l'étape c) ci-dessus avec les données d'exposition préprogrammées pour le micro-composant optique et
e) guider, à l'aide de l'enregistrement réalisé à l'étape d), un faisceau corpusculaire de telle sorte à pouvoir réaliser en alignement précis sur ou au-dessus de la zone prédéterminée (40 ; 130) le micro-composant optique présentant une propriété optique prédéfinie.

2. Procédé selon la revendication 1,
**caractérisé en ce que** l'étape c) comprend les phases suivantes :
c1) calculer, à partir des coordonnées du bord de la surface prédéfinie (20 ; 100), le centre de ladite surface ;
c2) déterminer les coordonnées de la zone prédéterminée (40, 130) à l'intérieur de ladite surface prédéfinie (20 ; 100) par rapport audit centre.

3. Procédé selon la revendication 1 ou 2,
**caractérisé en ce que** l'étape a) comprend les sous-étapes suivantes :
a.1) réaliser une première image de faible grossissement de la surface prédéfinie (20 ; 100) de l'élément optique (30 ; 110) ;
a.2) déterminer grossièrement la position du bord de la surface (35 ; 160) à plusieurs endroits prédéterminés et en relever les coordonnées ;
a.3) amener, à partir des coordonnées du bord ainsi déterminées, l'élément optique (30 ; 110) sur le site d'irradiation ;
a.4) réaliser une succession d'images de grossissement croissant d'une zone (60) de focalisation sélectionnée sur la surface (20) jusqu'à obtention d'un faisceau corpusculaire mis au point et stigmatisé de façon optimale,
et **en ce que** l'étape b) consiste à :
exécuter aux endroits prédéterminés (62, 64, 66, 68 ; 150, 152, 154) du bord de la surface (35 ; 160) une opération de mesure du contraste afin de préciser les coordonnées correspondantes du bord le long d'une ligne évoluant perpendiculairement audit bord.

4. Procédé selon la revendication 1, 2 ou 3,
**caractérisé en ce que**, avant l'étape a), l'on applique, sur la surface prédéfinie (2 ; 100), par procédé d'évaporation et en une épaisseur prédéterminée un vernis sec photosensible au faisceau corpusculaire ou un polymère extrait d'une phase gazeuse plasmagène obtenu à partir de précurseurs fournis à part.

5. Procédé selon la revendication 4,
**caractérisé en ce que** le micro-composant optique (10 ; 120) réalisé à partir du vernis sec appliqué par procédé d'évaporation ou du polymère extrait est développé par voie thermique ou par solvants.

6. Procédé selon la revendication 1,2 ou 3,
**caractérisé en ce qu'**à l'étape e) le micro-composant optique (10 ; 120) est déposé à l'aide du faisceau corpusculaire sur ou au-dessus de la zone prédéterminée (40 ; 130).

7. Procédé selon l'une quelconque des revendications 1 à 6,
**caractérisé en ce que** l'élément optique représente une fibre optique (30) et/ou un laser (110).

8. Procédé selon l'une quelconque des revendications 1 à 7,
**caractérisé en ce que** l'on réalise sur la zone prédéterminée (40 ; 130) de la surface prédéfinie (20 ; 100) de l'élément optique (30 ; 110) des couches tridimensionnelles de polymères structurés.

9. Procédé selon l'une quelconque des revendications 1 à 8
**caractérisé en ce que** les phases a.1), a.2) et a.3) sont remplacées par les opérations suivantes:
a1') réaliser une image de faible grossissement des surfaces prédéfinies (20 ; 100) d'un ensemble d'éléments optiques (30 ; 110) ;
a2') déterminer grossièrement chacune des positions des bords de la surface (35 ; 160) à plusieurs endroits prédéterminés et en relever les coordonnées ;
a3') sélectionner l'élément optique (30 ; 110) et l'amener, à partir des coordonnées du bord ainsi relevées, sur le site d'irradiation où le micro-composant (10 ; 120) doit être réalisé.

10. Dispositif de réalisation et de positionnement précis de micro-composants optiques (10 ; 120) sur des éléments optiques (30 ; 110) conformément au procédé selon l'une des revendications 1 à 10,
**caractérisé en ce qu'**il comprend :
un dispositif de génération d'un faisceau corpusculaire d'intensité variable ;
un détecteur de contraste permettant de déterminer les contours d'une surface, préalablement définie et enregistrée, d'un élément optique ;
un ordinateur capable de calculer à partir des valeurs livrées par le détecteur de contraste l'emplacement d'une zone prédéterminée à l'intérieur de la surface prédéfinie ;
un dispositif de guidage de faisceau programmable qui, sur impulsion des coordonnées fournies par l'ordinateur et des données d'exposition préalablement programmées, guide le faisceau corpusculaire sur la surface prédéfinie de sorte à pouvoir réaliser sur la zone prédéterminée le micro-composant présentant une propriété optique prédéfinie.

11. Dispositif selon la revendication 10,
**caractérisé en ce qu'**il comprend un ordinateur programmable destiné à assurer la surveillance et le pilotage du dispositif.

12. Dispositif selon la revendication 10 ou 11,
**caractérisé en ce qu'**il comprend une platine à moteur pilotée par l'ordinateur.
